# EUROPEAN PATENT APPLICATION

(11) **EP 2 485 156 A1**
(43) Date of publication of application: **08.08.2012**
(21) Application number: 11153548.0
(22) Date of filing: 07.02.2011
(51) Int. Cl.: G06F 15/02, G06F 1/16, H04L 29/08, G06F 1/32

(54) **Method and apparatus for multi-page electronic content viewer**

(71) Applicant: Research In Motion Limited, Waterloo, ON N2L 3W8 (CA)
(72) Inventor: Dvorak, Joseph Leonard, Rolling Meadows, IL 60008 (US); Hirsch, Alexander Samson, Rolling Meadows, IL 60008 (US)
(74) Representative: Patel, Binesh

(57) **Abstract**

An apparatus and method of displaying content on a multi-page electronic content viewer is provided. Sensor input associated with at least one display panel from a plurality of displays panels infinitely rotatable around a common edge of a binding element is determined. The movement is used to determine a direction of movement of the at least one display panel around an axis of the binding element based upon the sensor input. A request is then sent for content to a storage device for content to be displayed on the next viewable display. The request includes a direction indicator determined by the direction of movement of the at least one display panel around the binding element. Content is then received and displayed on display screens of one or more of the plurality of display panels.

## Description

### TECHNICAL FIELD

The present disclosure relates generally to electronic content viewers and, more particularly, to methods and apparatus to delivering content to a multi-page electronic content viewer.

### BACKGROUND

Electronic books (e-books) are typically digital publications that may be stored in and displayed via different types of electronic viewer or reading devices including stationary and portable devices. Some known e-book viewers are software applications installed in processor systems such as computers or portable devices, while other e-book viewers are dedicated devices that provide functionality specifically tailored for reading published works in electronic format. Some known portable electronic devices for displaying e-books are e-book viewers, or e-book readers, personal digital assistants, and smart phones. Acquiring e-books may involve purchasing and downloading from an online store or purchasing e-books stored on a removable storage medium. E-books viewers provide a single viewing or reading surface. Many people do not use current e-book viewers because the devices do not sufficiently replicate the experience of reading a physical book. Examples are the physical sensation of turning a page, seeing two pages together, and opening and closing a book.

Accordingly, methods and apparatus that enable improved multi-page electronic content viewers remain highly desirable.

### SUMMARY

In one aspect, the present disclosure provides a method of displaying content on a multi-page electronic content viewer. The method comprises the steps recited in claim 1.

In another aspect, the present disclosure provides a multi-page electronic content viewer as recited in claim 13.

In yet another aspect, the present disclosure provides a computer readable memory coupled to a processor, the memory containing instructions which when executed by processor for displaying content on a multi-page electronic content viewer, the instructions comprising the method of as recited in claims 1 to 12.

Other aspects of the present disclosure will be apparent to those of ordinary skill in the art from a review of the following detailed description in conjunction with the drawings.

### BRIEF DESCRIPTION OF THE DRAWINGS

Further features and advantages of the present disclosure will become apparent from the following detailed description, taken in combination with the appended drawings, in which:
Figure 1 shows a representation of system for displaying content on a multi-page electronic content viewer;
Figure 2 shows a top view of the example multi-page electronic content viewer;
Figure 3 shows a front reading view of the example multi-page electronic content viewer in an open configuration;
Figure 4 shows a front reading view of the example multi-page electronic content viewer in a closed configuration;
Figure 5 shows a block diagram of the example multi-page electronic content viewer;
Figure 6a to 6c show the operation of the example multi-page electronic content viewer;
Figure 7 shows flow chart of receiving content at the example multi-page electronic content viewer;
Figure 8 shows a block diagram of a mobile device for sending content to the example multi-page electronic content viewer; and
Figure 9 shows flow chart of sending content from the mobile device to the example multi-page electronic content viewer.

It will be noted that throughout the appended drawings, like features are identified by like reference numerals.

### DETAILED DESCRIPTION

Although the following discloses example methods and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The example methods and apparatus described herein may be used to implement multi-page electronic content viewers to display content including electronically published/stored books, electronically stored documents, web-based content, and/or any other content. In some example implementations, a multi-page electronic content viewer implemented in accordance with the example methods and apparatus disclosed herein may be a multi-page electronic content viewer including three or more display panels, which may be single-sided or dual-sided display panels. In some example implementations, the multi-page electronic content viewer may be adapted to include removably attachable display panels to facilitate aftermarket re-configurations thereof by adding additional display panels thereto and/or removing display panels therefrom. In addition, some example display panels may be configured to be physically interchanged or shared between three or more multi-page electronic content viewers. Such physically interchangeable display panels may be used to facilitate sharing content between different electronic content viewers.

The example multi-page electronic content viewers disclosed herein may be configured to display unprotected content (e.g., open content) and protected content. Protected content may include content protected from undesired or impermissible distribution or accessibility. Some content may be protected from being displayed on some electronic content viewers (or to particular users or types of users), while not being protected from displaying on other electronic content viewers (or to particular users or types of users). To protect the distribution or accessibility of such content, the example methods and apparatus disclosed herein may be used to create, store, access, and/or enforce content protection policies. Such content protection policies may be pre-defined or commercially available protection policies or end-user-created protection policies. Pre-defined protection policies may be created by, for example, content publishers prior to publishing electronically presentable content (e.g., electronic books, web content, and/or other media). Enduser- created protection policies may be created by, for example, end users of electronic content viewers or other individual persons that generate documents or supplemental information to pre-existing documents and desire to protect their documents or supplemental information from access by persons other than those for which permissions are specifically granted.

The example methods and apparatus disclosed herein may be used to deliver content to the multi-page electronic content viewer using a mobile device. The delivery of the content may include content protection policies using one or more content protection enforcement techniques. For example, some content protection techniques may involve conditional transmission/reception of content between two or more electronic content viewers depending on protection policies of content and permissions associated with target recipients. Such content protection techniques and others disclosed herein may be used in connection with an electronic document or published work in its entirety or in piecemeal fashion on portions (e.g., individual pages) of such documents or published works.

In some example implementations, the example methods and apparatus described herein may be used in connection with mobile communication devices, mobile computing devices, or any other device capable of communicating wirelessly with a wireless network. Such devices also referred to as terminals, wireless terminals, or user equipment (UE), may include mobile smart phones (e.g., a BlackBerry® smart phone), wireless personal digital assistants (PDA), laptop/notebook/netbook/tablet computers with wireless adapters, etc.

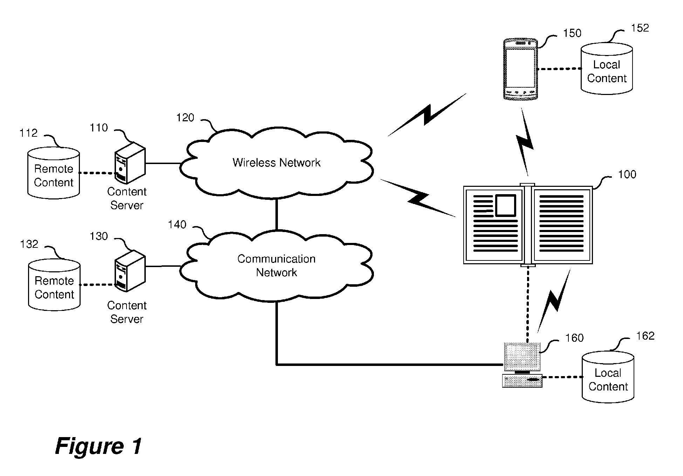

Figure 1 shows a representation of system for displaying content on multi-page electronic content viewer 100. The electronic content viewer 100 provides content to a user through three or more display screens coupled along a common edge to a central binding. The multi-page electronic content viewer 100 is cable of wireless communication to a mobile device 150 or directly from the wireless network 120 to retrieve content for display. The mobile device may store location content 152, or be coupled to a wireless network 120 for retrieving remote content 112 via a content server 110. The wireless network 120 may be coupled to other remote content stores via communication network 140, such as the Internet, to content server 130 and remote content 132. Computing device 160, such as a personal computer, may be utilized to provide local content 162. The computing device 160 may communicate with the viewer 100 via a wireless or wired connection. The viewer 100 may be able to retrieve content directly from remote content servers through a wireless interface via the wireless network 120. The viewer 100 may be paired to the mobile device 150 and act as a peripheral device, such as a Bluetooth(TM) device. In the pairing process the configuration and capability of the viewer are provided to, or determined by, the mobile device 150.

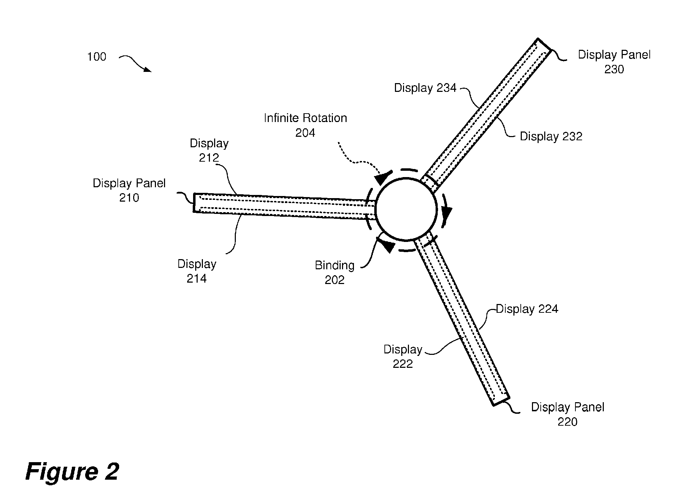

Figure 2 shows a top view of the example multi-page electronic content viewer. In this example three display panels are shown, however more than three may be provided. Each of the display panels 210, 220 and 230 are implemented as a double-sided display panel having opposing displays. Opposing sides of the display panel 210 providing viewable screens are indicated by reference numerals 212 and 214. Opposing sides of the display panel 220 providing viewable screens are indicated by reference numerals 222 and 224. Opposing sides of the display panel 230 providing viewable screens are indicated by reference numerals 232 and 234. The opposing displays enable content to be rendered on both faces of the each display panel. In this manner, when a user turns the display panels, in a page turning fashion, a sequentially next page in an electronic publication or document can be remotely retrieved and displayed on a display (e.g., the display 212) opposing the previously viewed display (e.g., the display 214) to simulate a paper-based reading experience.

The displays may be implemented using any suitable display technology including, for example, e-paper, liquid crystal display (LCD), organic light emitting diode (OLED), high contrast bi-stable ink technology or other suitable low power, highly readable display technology that approaches the reading experience of paper. In some example implementations the display panels may additionally be provided with touchscreens overlaid on the displays (e.g., the displays 212, 214, 222, 224, 232 and 234) to enable user input and control of the multi-page electronic content viewer 100. Additionally or alternatively, the display panels and/or the binding 202 may be provided with one or more user interface buttons or keys (not shown) to enable user-input and control of the multi-page electronic content viewer 100.

In the illustrated example of Figure 2, the display panels 210, 220 and 230 are shown in an infinitely rotatable configuration relative to the binding 202. That is, each of the display panels 210, 220 and 230 are configured to rotate an infinitely about the binding 202. Such an infinite rotation configuration may be advantageously used to simulate a reading experience similar to that of traditional paper-based books. For example, the binding 202 may be configured to sense or detect when each of the display panels 210, 220 or 230 is turned in a page turning manner in, for example, a direction generally indicated by arrows 204. The pages may be turned around the binding in either a clockwise or counter-clockwise direction.

Upon sensing a page turn, the binding 202 may cause the visible displays (e.g., the displays 212, 214, 222, 224, 232 and 234) of the display panels 210, 220 and 230 to display sequentially next pages of an electronic publication or document. In this manner, users may progress or move through a multi-page publication or document by turning the display panels about the binding. The infinitely rotatable capabilities of the display panels about the binding provide an infinite number of page turns and, thus, the multi-page electronic content viewer 100 may be used to present multi-page publications or documents having any number of pages.

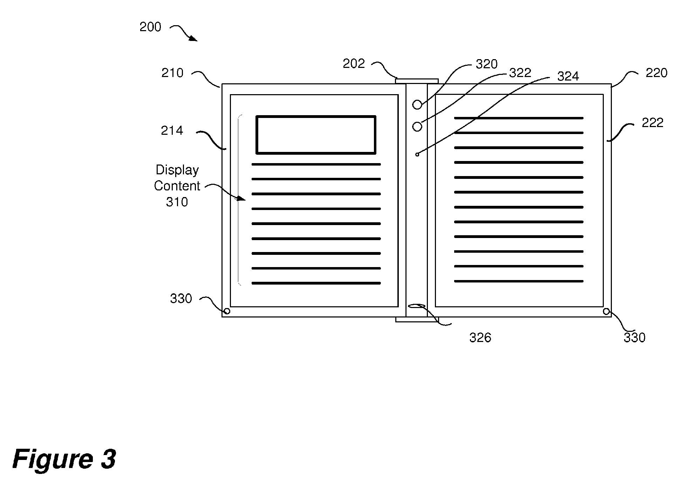

Figure 3 shows a front reading view of the example electronic content viewer 200 in an open configuration. The multi-page electronic content viewer 200 showing display 214 of display panel 210 and display 222 of display panel 220 attached to binding 202 in a 'viewing' or open position displaying content 310 on the display screens 214 and 222. In some example implementations, to sense or detect page turns based on turning of the display panels 210, 220, and 230, the binding 202 may be provided with sensors (e.g., rotary encoders or magnetic sensors). Additionally or alternatively, the display panels may be provided with sensors to sense movement or motion (e.g., accelerometers) and/or sensors to sense placement relative to one another. In some example implementations, the display panels may be provided with magnets 330 and opposing reed switches, or other proximity sensor technology to detect the positioning of the display panels adjacent one another and to detect when the display panels are moved away from one another. In some example implementations, the display panels may communicate or send turn page messages or sensor output to the binding 202. The turn page messages may also include the direction of that page turn so that the binding 202 can send a request to the remote storage or mobile device for the next or previous page(s) content to the display panels 210, 220, or 230 to be presented to a user as if the user were turning a page of a traditional paper-based book. The binding 202 may also include other devices such as an image sensor or camera 320, motion detection or light detector 322. The binding may also provide a speaker 326 for playing multimedia content and a microphone 324 may also be provided for receiving audio input for communication or voice commands.

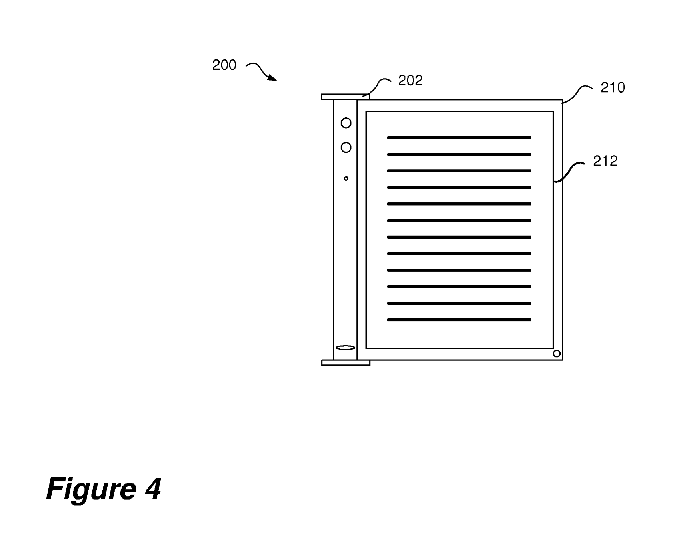

Figure 4 shows a front reading view of the example multi-page electronic content viewer in a closed configuration. In the closed configuration, display panel 220 is visible, while panels 210 and 230 are behind display panel 220. The rear panels may be locked to the front panel, either mechanically or electro mechanically. In the closed configuration the non-visible panels may be disabled or deactivated to conserve power. Alternatively, in a closed configuration the outside panel surface may be disabled, with the multi-page electronic content viewer only being activated when the first page is turned to an open configuration.

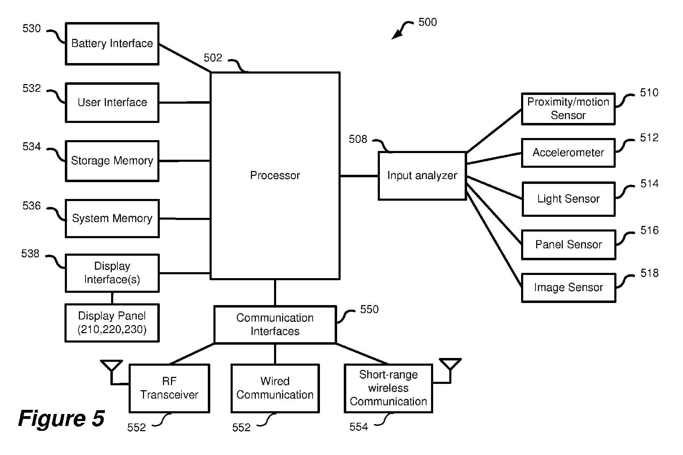

Figure 5 shows a block diagram of the example multi-page electronic content viewer on which the present technology may be implemented. In some example implementations, some portions of the example apparatus 500 may also be implemented in the mobile device 150. In the illustrated example, the apparatus 500 includes a processor 502 that may be used to control the overall operation of the apparatus 500. The processor 502 may be implemented using a controller, a general purpose processor, a digital signal processor, or any combination thereof.

In the illustrated example of Figure 5, the apparatus 500 also includes an input analyzer 508 for receiving status inputs from one or more sensors to determine movement, orientation or position of the multi-page electronic content viewer and the display panels therein. The input analyzer 508 can receive input from one or more sensing or positioning devices located in the panels and/or the binding. For example, a proximity or motion sensor 510 is used to determine the proximity of a user from the binding or the proximity of the display panels relative to each other. An accelerometer 512 in the binding and/or each display panel may be provided to detect motion and or direction. A light sensor 514 may be embedded in the binding to detect changes in lighting conditions and possible presence of a user. Panel sensor(s) 516 can be embedded to determine if a user is in contact with a display panel or determine contact between display panels, positioning of the display panels adjacent one another and to detect when the display panels are moved away from one another such as by using magnets and opposing reed switches. An image sensor 518, such as a camera to detect the presence of a user or perform facial recognition to determine where the user is viewing may be provided. The sensors may be incorporated in the binding or each display panel or a combination thereof. The input analyzer 508 analyzes input from one or more sensors to determine movement, or possible movement, of the display panels. The input analyzer can then provide the necessary information for the processor to request additional content from remote storage. The input analyzer functionality may alternatively be provided by a processor resident in each display panel which in turn provides messaging to the main processor 502.

The apparatus 500 is provided with one or more communication subsystem(s) 550 to enable sending and receiving content. The communication subsystem(s) 550 may be wireless as provided by an RF transceiver 552, wired 552, or short-range wireless communication 554 or a combination thereof. Example wireless communication technologies that may be employed to implement the one or more communication subsystem(s) 550 include, for example, IEEE® 802.11 radio technology, BLUETOOTH® radio technology, ZIGBEE® radio technology, wireless USB radio technology, and ultra-wideband (UWB) radio technology.

In the illustrated example, the apparatus 500 is also provided with a system memory 536 and a storage memory 534. The system memory 536 may be implemented using a volatile memory such as a random access memory (RAM) and used to store immediately available computer readable instructions and data (e.g., content presentable via the multi-page electronic content viewer 100, content protection policies, etc.) to control the operation of the apparatus 500. The storage memory 534 may be implemented using a non-volatile memory such as a flash memory and may be used as long-term storage of computer readable instructions and/or data.

To enable a user to use and interact with or via the multi-page electronic content viewer 100, the apparatus 500 is provided with a display interface 538 and a user input interface 532. The display interface 538 can be an LCD display interface, an e-paper display interface, an organic light emitting diode (OLED) interface, etc. The user interface 532 input mechanism could be an alphanumeric keyboard and/or telephone-type keypad, a multi-direction actuator or roller wheel with dynamic button pressing capability, a touch panel, individual keys/buttons, etc. The display interface provides the required information to the display panel or display screen for rendering. In the illustrated example, the apparatus 500 is a battery-powered device and is, thus, provided with a battery interface 530 to interface with, for example, a battery.

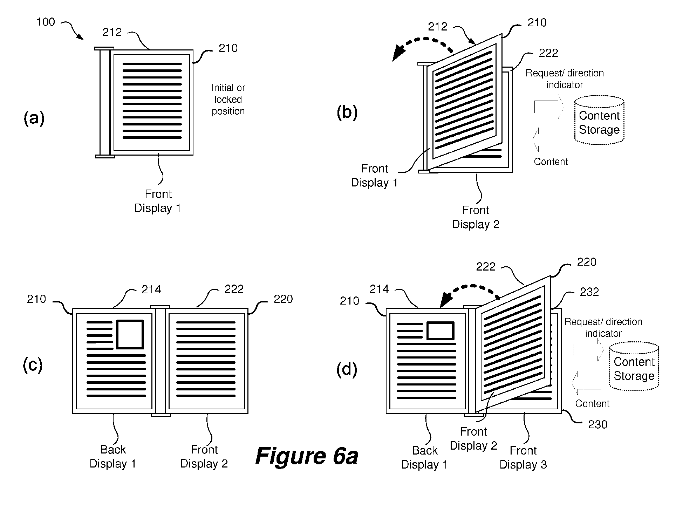

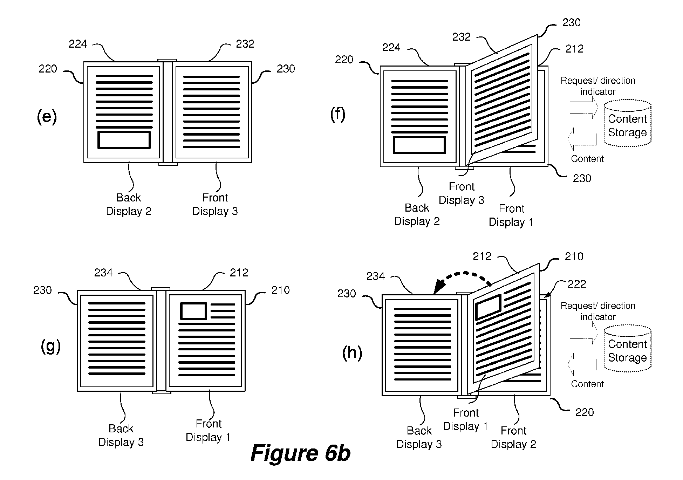

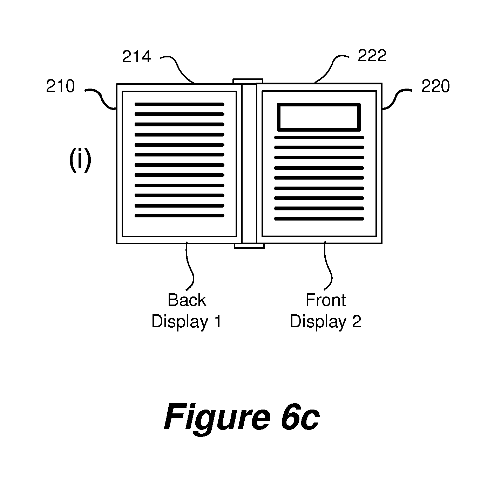

Figures 6a to 6c show the operation of the example multi-page electronic content viewer in different configuration states (a) to (i). As shown in (a), in a closed or locked position, the multi-page electronic content viewer 100 only has one display panel 210 providing display screen 212. When the display panel 210 is turned, as shown in (b), the direction of the motion of the page turning is determined and a request including a direction indicator is sent to a content storage device, for example, through a Bluetooth(tm) connection to a mobile device. The request can include a content identifier, a direction indication and/or an index identifier to provide a relative determination of the content required by the multi-page electronic content viewer. The device providing the content to the electronic content viewer would then provide the content to the device via a wired or wireless mechanism for the next two opposing screens (214 and 222) that will be viewed based upon the detected direction of the page turn around the binding. The content is then displayed, as shown in (c), on screen 214 of display panel 210 and screen 222 of display panel 220. On the next panel rotation around the binding, as shown in (d), another request is made to the content storage, and content is provided for screen 214 of display panel 220 and opposing screen 232 of display panel 230. The process is repeated, as shown in (e) to (h), with content being display on the next viewable panel until the first display panel 210 with display 214 and display panel 220 with screen 222 is in the viewing position. At shown in (i), the display panel is back to the viewing configuration as shown in Figure 6(c) having completed a full rotation around the binding. Although only three display panels are shown, the operation is equally applicable to any configuration of two or more panels.

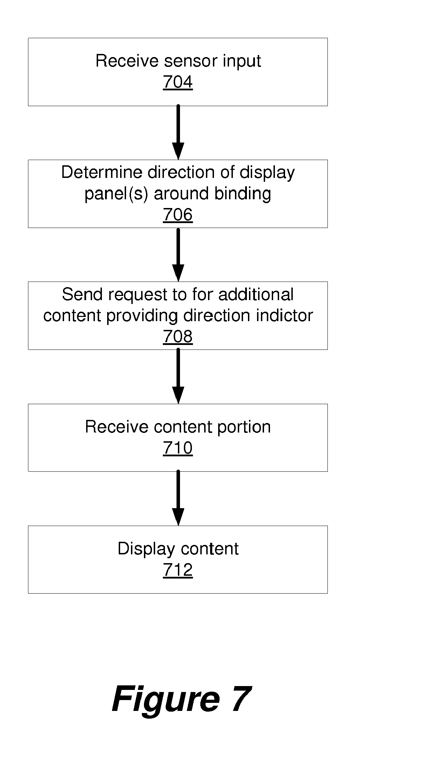

Figure 7 shows flow chart of receiving content at the example multi-page electronic content viewer. Content is displayed on one or more screen of one or more display panels of the multi-page electronic content viewer. A portion of the content, or start-up content may be initially stored on the viewer, for example a user interface or start-up screen or user interface screen, or may be requested from remote storage. Depending on the starting configuration, such as tablet or single screen mode, or open book viewing mode, sensor input is received from one or more sensors (704) in the binding or in one or more of the two or more display panels. The direction of the display panel(s) movement is determined based upon the sensory input (706). The direction may simply be a re-orientation of the current viewing surface, for example turning the viewer around, in which case the existing content on the display screen would be simply re-oriented. However, if a panel is being moved around the binding a content request is sent by one or more of the communication interfaces for addition content (708). The content request may include a content identifier, a direction indicator, content index or a request for the next block of content based upon a predetermined size. The content is received (710) and displayed on the next display screens (712) that will be visible based upon the determined motion around the binding.

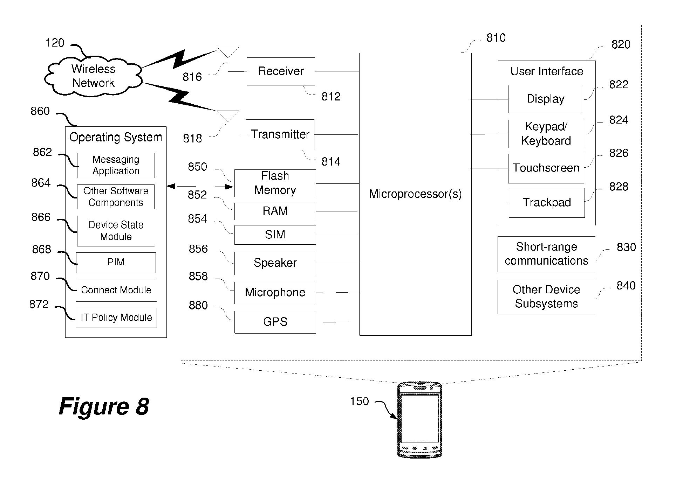

Figure 8 is a schematic depiction of a wireless communications device as one example of a wireless mobile device content management and delivery to the multi-page electronic content viewer may be implemented. As shown by way of example in Figure 8, the wireless mobile device, which is designated generally by reference numeral 150, includes a processor (or microprocessor) 810 for executing one or more applications, memory in the form of flash memory 820 and/or Flash memory 850 and RAM 852 (or any equivalent memory devices) for storing the one or more applications and related data, and a user interface 820 with which the user interacts with the device. The user interface 840 may include a display 822 and an alphanumeric keypad/keyboard 824 and/or touch screen 826. The device may include a trackball, thumbwheel or trackpad 828 for cursor movement and navigation.

As shown by way of example in Figure 8, the mobile device 150 includes a radio frequency (RF) transceiver comprising a receiver 812 and associated receiver antenna 816 and transmitter 814 and associated transmitter antenna 818. The RF transceiver for communication with a wireless network 120 using a wireless communication protocols such as, for example but not limited to, GSM, UMTS, LTE, HSPDA, CDMA, W-CDMA, Wi-MAX, etc. A subscriber identify module (SIM) card 854 may be provided. Optionally, where the device is a voice-enabled wireless communications device such as, for example, a smartphone or cell phone, the device would further include a microphone 858 and a speaker 856. Short-range communications is provided through wireless technologies such as Bluetooth™ or wired Universal Serial Bus™ connections to other peripheries or computing devices or by other device sub-systems 840. This device may optionally include a Global Positioning System (GPS) receiver chipset 880 or other location-determining subsystem.

The mobile device 150 also includes an operating system 860 and software components 862 to 872 which are described in more detail below. The operating system 860 and the software components 862 to 872 that are executed by the main processor 810 are typically stored in a persistent store such as the flash memory 850, which may alternatively be a read-only memory (ROM) or similar storage element (not shown). Those skilled in the art will appreciate that portions of the operating system 860 and the software components 862 to 872, such as specific device applications, or parts thereof, may be temporarily loaded into a volatile store such as the RAM 852. Other software components can also be included, as is well known to those skilled in the art.

The subset of software applications that control basic device operations, including data and voice communication applications, may be installed on the mobile device 150 during its manufacture. Other software applications include a message application 862 that can be any suitable software program that allows a user of the mobile device 150 to send and receive electronic messages. Various alternatives exist for the message application 862 as is well known to those skilled in the art. Messages that have been sent or received by the user are typically stored in the flash memory 850 of the mobile device 150 or some other suitable storage element in the mobile device 150. In at least some embodiments, some of the sent and received messages may be stored remotely from the device 150 such as in a data store of an associated host system that the mobile device 150 communicates with.

The software applications can further comprise a device state module 866, a Personal Information Manager (PIM) 868, and other suitable modules (not shown). The device state module 866 provides persistence, i.e. the device state module 866 ensures that important device data is stored in persistent memory, such as the flash memory 850, so that the data is not lost when the mobile device 150 is turned off or loses power. The PIM 868 includes functionality for organizing and managing data items of interest to the user, such as, but not limited to, e-mail, contacts, calendar events, voice mails, appointments, and task items.

The mobile device 150 may also comprise a connect module 870, and an IT policy module 872. The connect module 870 implements the communication protocols that are required for the mobile device 150 to communicate with the wireless infrastructure and any host system, such as an enterprise system, that the mobile device 150 is authorized to interface with.

The connect module 870 includes a set of APIs that can be integrated with the mobile device 150 to allow the mobile device 150 to use any number of services associated with the enterprise system. The connect module 870 allows the mobile device 150 to establish an end-to-end secure, authenticated communication pipe with the host system. A subset of applications for which access is provided by the connect module 870 can be used to pass IT policy commands from the host system to the mobile device 150. This can be done in a wireless or wired manner. These instructions can then be passed to the IT policy module 872 to modify the configuration of the device 150.

Some examples of other software components 864 that may be executed by the operating system 860 may include, peer-to-peer or instant messaging application, social networking, mapping, internet browser, calendar, address book and phone applications It will be appreciated that the various applications may operate independently or may utilize features of other applications. For example, the phone application and messaging application may use the address book for contact details. An electronic viewer management application may also include electronic viewer content management for access content from one or more remote content stores through the wireless network in addition to servicing requests from the electronic content viewer through for example the short-range communications interface 830. The electronic book application determines the content required by the electronic viewer and provides the content to the electronic content viewer 100 through the same interface through which the request was provided. The electronic viewer application may be preconfigured to know the configuration of the electronic content viewer in terms of the number of displays during a pairing process. The configuration may include the memory capacity and amount of content it should provide, user features provided by the user and the number of display screens and display panels. In addition the application may provide configuration controls to manage the functions of the multi-page electronic content viewers or the presentation of content therein. For example the locking of the display panels may be performed through the mobile device to deactivate page motion.

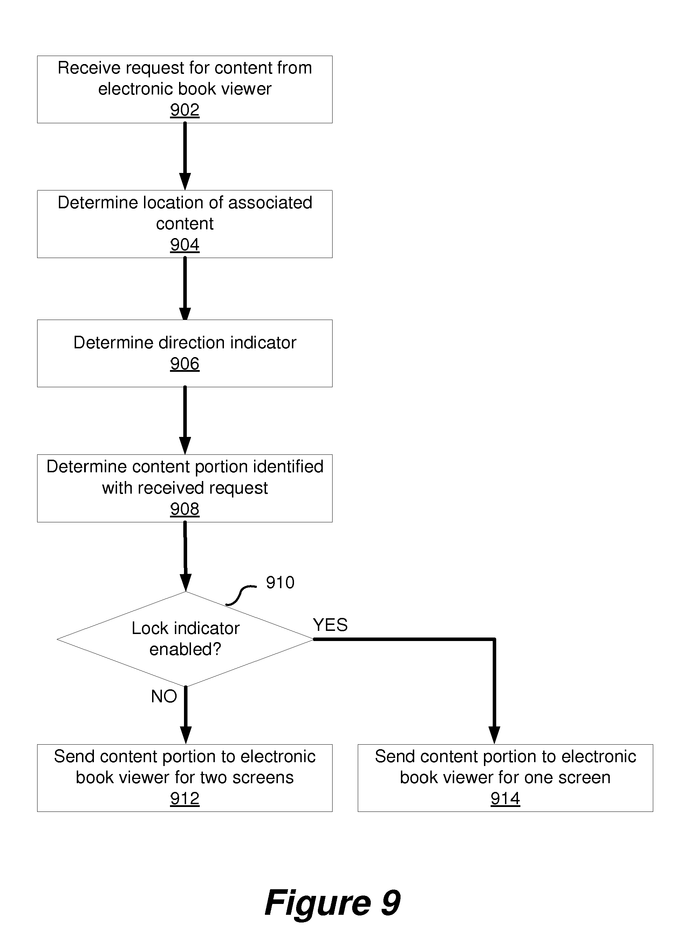

Figure 9 shows flow chart of sending content from the mobile device to the example multi-page electronic content viewer. The mobile device 150, receives a request (902) for content from a paired electronic content viewer 100. The location of the associated content is determined (904). The location may only be required to be determined on the initial request. The location may be stored locally in memory on the mobile device or be an identifier to a networked storage location. From the request a direction indicator is determined (906) providing an indicator as to which portion of content is required. The direction indicator may also include an index to identify a location within the content, or the mobile device may maintain a current position index and only require a direction to determine the next portion (908) required by the multi-page electronic content viewer. The content can then be sent to the electronic viewer (912) through the short-range communications interface, however if a lock indicator is either provided in the request or enabled at the mobile device (YES at 910) only content sufficient for the current display screen is sent (914). If the lock indicator is not enabled (NO at 910) content sufficient for the next two display screens are sent. Although the example defines content being provided in portions sufficient for display on one ore two screens, content may be provided for multiple screens based upon memory and processing capabilities of the multi-page electronic content viewer. Although the method is described in relation to a mobile device, it may be implemented on a computing device, mobile or otherwise, that can communicate with the multi-page electronic content viewer through wired or wireless communications.

Although certain methods, apparatus, and computer readable memory have been described herein, the scope of coverage of this disclosure is not limited thereto. To the contrary, this disclosure covers all methods, apparatus, computer readable memory, and articles of manufacture fairly falling within the scope of the appended claims either literally or under the doctrine of equivalents.

## Claims

1. A method of displaying content on a multi-page electronic content viewer (200), the method comprising:
receiving (704) sensor input (510, 512, 514, 516, 518) associated with at least one display panel from a plurality of displays panels infinitely rotatable (210, 220, 230) around a common edge of a binding element (202);
determining (706) a direction of movement of the at least one display panel around an axis of the binding element based upon the received sensor input;
sending (708) a request for content to a storage device (152, 162, 112, 132), the request including a direction indicator determined by the direction of movement of the at least one display panel around the binding element; and
displaying (710) received content on display screens (214, 222) of one or more of the plurality of display panels.

2. The method of claim 1 wherein sending the request for content further comprises determining one or more of the plurality of display panels that will be visible to a user based upon the direction of movement around the binding element.

3. The method of claim 2 further comprising determining a screen of the one or more of the plurality of display panels to display the content, wherein each of the plurality of display panels are dual-sided having a screen on each planar side on which to display content.

4. The method of claim 3 further comprising determining a first screen of a first display panel and an opposing second screen of a second display panel for displaying when the screens in an open book position.

5. The method of any one of claims 1 to 4 wherein the request for content is sent to a mobile device via communications interface via a wireless communications transceiver.

6. The method of any one of claims 1 to 4 wherein the request for content is sent wirelessly to the storage device that is remote from the multi-page electronic content viewer and a content portion is received from the remote storage device for display on the display panels to be visible to the user.

7. The method of any one of claims 1 to 6 wherein sending the request comprises determining a size indicator identifying the amount of content that the electronic content viewer can display.

8. The method of any one of claims 1 to 7 wherein sending the request for content further comprises a content identifier to uniquely identify the content to be displayed.

9. The method of any one of claims 1 to 8 wherein the direction indicator identifies a next portion of content required for display on the next display panels to be viewed.

10. The method of any one of claims 1 to 9 wherein the sensor input is selected from a group comprising one or more of: rotation encoders; magnetic sensors; accelerometers; magnets and opposing reed switches; image sensor, motion detector and light detector.

11. The method of any one of claims 1 to 10 wherein the display panels are selected from a group comprising: e-paper, liquid crystal display (LCD), organic light emitting diode (OLED), and high contrast bi-stable ink technology.

12. The method of any one of claims 1 to 11 further comprising selectively deactivating one or more display screens based upon the determined movement around the binding element wherein it is determined that the deactivated screens will not be viewed by a user of the electronic content viewer as the display panels are rotated around the binding element.

13. A multi-page electronic content viewer comprising:
a binding element (202);
a plurality of display panels (210, 220, 230) attached lengthwise along an axis of the binding element;
a sensor (510, 512, 514, 516, 518) for determining an orientation and rotation of the display panels around the axis of the binding element, each of the plurality of display panels infinitely rotatable around the binding element;
a communications interface (550) for sending a request and receiving for content from a content storage device and receiving requested content; and
a processor (502) for receiving senor input and displaying content on the plurality of displays and determining a direction of one or more of the plurality of displays around the axis of the binding element and sending a content request including a direction indicator sent via the communications interface to the content storage device, the processor implementing the method of claims 1 to 12.

14. A computer readable memory coupled to a processor, the memory containing instructions which when executed by processor for displaying content on a multi-page electronic content viewer, the instructions comprising the method of claims 1 to 12.

## Amended claims

### Amended claims in accordance with Rule 137(2) EPC.

**1.** A method of displaying content on a multi-page electronic content viewer (200), the method comprising:
receiving (704) sensor input (510, 512, 514, 516, 518) associated with at least one display panel from a plurality of displays panels infinitely rotatable (210, 220, 230) around a common edge of a binding element (202);
determining (706) a direction of movement of the at least one display panel around an axis of the binding element based upon the received sensor input;
sending (708) from the multi-page content viewer, a request for a next portion of content to a storage device (152, 162, 112, 132) remote from the multi-page electronic content viewer, the request including a direction indicator determined by the direction of movement of the at least one display panel around the binding element; and
receiving (710) the next portion of content from the storage device (152, 162, 112, 132), the next portion of content determined from the direction indicator relative to a current position index of the content
displaying (712) received portion of content on next viewable display screens (214, 222) of one or more of the plurality of display panels.

**2.** The method of claim 1 wherein sending the request for the portion of content further comprises determining one or more of the plurality of display panels that will be visible to a user based upon the direction of movement around the binding element.

**3.** The method of claim 2 further comprising determining a screen of the one or more of the plurality of display panels to display the content, wherein each of the plurality of display panels are dual-sided having a screen on each planar side on which to display content.

**4.** The method of claim 3 further comprising determining a first screen of a first display panel and an opposing second screen of a second display panel for displaying when the screens in an open book position.

**5.** The method of any one of claims 1 to 4 wherein the request for the portion of content is sent to a mobile device via communications interface via a wireless communications transceiver.

**6.** The method of any one of claims 1 to 4 wherein the request for the portion of content is sent wirelessly to the storage device that is remote from the multi-page electronic content viewer and the portion of content is received from the remote storage device for display on the display panels to be visible to a user.

**7.** The method of any one of claims 1 to 6 wherein sending the request comprises determining a size indicator identifying the amount of content that the portion of content can contain that the electronic content viewer can display.

**8.** The method of any one of claims 1 to 7 wherein sending the request for content further comprises a content identifier to uniquely identify the content to be displayed.

**9.** The method of any one of claims 1 to 8 wherein the sensor input is selected from a group comprising one or more of: rotation encoders; magnetic sensors; accelerometers; magnets and opposing reed switches; image sensor, motion detector and light detector.

**10.** The method of any one of claims 1 to 9 wherein the display panels are selected from a group comprising: e-paper, liquid crystal display (LCD), organic light emitting diode (OLED), and high contrast bi-stable ink technology.

**11.** The method of any one of claims 1 to 10 further comprising selectively deactivating one or more display screens based upon the determined movement around the binding element wherein it is determined that the deactivated screens will not be viewed as the display panels are rotated around the binding element.

**12.** A multi-page electronic content viewer comprising:
a binding element (202);
a plurality of display panels (210, 220, 230) attached lengthwise along an axis of the binding element;
a sensor (510, 512, 514, 516, 518) for determining an orientation and rotation of the display panels around the axis of the binding element, each of the plurality of display panels infinitely rotatable around the binding element;
a communications interface (550) for sending a request and receiving portions of content from a content storage device (152, 162, 112, 132) remote from the multi-page electronic content viewer and receiving requested portion of content; and
a processor (502) for receiving senor input and displaying content on the plurality of displays and determining a direction of one or more of the plurality of displays around the axis of the binding element and sending a request for a portion of content including a direction indicator sent via the communications interface to the content storage device (152, 162, 112, 132) to determine the next portion of content to be displayed on the multi-page electronic content viewer relative to a current position index within the content, the processor implementing the method of claims 1 to 11.

**13.** A computer readable memory coupled to a processor, the memory containing instructions which when executed by processor for displaying content on a multi-page electronic content viewer, the instructions comprising the method of claims 1 to 11.
